# EUROPEAN PATENT APPLICATION

(11) **EP 1 777 793 A2**
(43) Date of publication of application: **25.04.2007**
(21) Application number: 06020322.1
(22) Date of filing: 27.09.2006
(51) Int. Cl.: H02J 3/00

(54) **System interconnection system**

(30) Priority: 29.09.2005 JP 2005283327
(71) Applicant: SANYO ELECTRIC CO., LTD., Moriguchi-shi, Osaka 570-8677 (JP)
(72) Inventor: Tobi, Yukio, Ota-shi, Gunma 373-0006 (JP); Madenokoji, Masaki, Honjo-shi, Saitama 367-0045 (JP)
(74) Representative: Glawe, Delfs, Moll

(57) **Abstract**

A system interconnection system for converting DC power generated by a DC power generating unit (1) to AC power and connecting the AC power to a system (11) including a load for consuming electric power generated by the DC power generating unit (1), a generated electric power detecting unit (16) for detecting the amount of electric power generated by the DC power generating unit (1), a sold/purchased electric power detecting unit (17) for detecting the amount of sold/purchased electric power from/to the DC power generating unit (1) to/from the system (11), and an adjusting unit (21) for adjusting a power consumption of the load in accordance with the amount of the sold/purchased electric power.

## Description

### BACKGROUND OF THE INVENTION

### 1. Field of the Invention

The present invention relates to a system interconnection system for converting DC power generated by a DC power generating unit such as a photovoltaic power generating system or the like to AC power and connecting the AC power thus achieved to a system (commercial power line).

### 2. Description of the Related Art

In such a system interconnection system, power generated by the DC power generating unit is self-consumed by loads such as air-conditioning apparatuses such as an air conditioner, etc., a freezer, a television set, a video, etc., and also when the generated power thus achieve is surplus, some or all of the generated power is supplied (regenerated) to a system (commercial power line). On the other hand, when the generated power is deficient, power is supplied from the system concerned to the loads.

In such a system interconnection system, the price to the amount of purchased electric power is generally greatly larger than the price to the amount of sold electric power. Accordingly, it is more economical to self-consume the generated power as efficiently as possible and also minimize the amount of purchased electric power.

However, there is a case where the power generated by the DC power generating unit is excessive or deficient with respect to the self-consumed power, and thus it is required to purchase electric power. This is uneconomic.

### SUMMARY OF THE INVENTION

The present invention has been implemented in view of the foregoing problem, and has an object to provide a system interconnection system that can reduce the amount of purchased electric power at maximum and thus enhance an economic efficiency.

In order to attain the above object, according to the present invention, there is provided a system interconnection system for converting DC power generated by a DC power generating unit (1) to AC power and connecting the AC power to a system (11), characterized by comprising: a load for consuming electric power generated by the DC power generating unit (1); a generated electric power detecting unit (16) for detecting the amount of electric power generated by the DC power generating unit (1) ; a sold/purchased electric power detecting unit (17) for detecting the amount of sold/purchased electric power from/to the DC power generating unit (1) to/from the system (11) ; and an adjusting unit (21) for adjusting a power consumption of the load in accordance with the amount of the sold/purchased electric power.

In the above system interconnection system, the adjusting unit may instruct the load to reduce the power to be consumed by the load concerned when the amount of sold electric power is smaller than a predetermined value.

In the above system interconnection system, the adjusting unit may instruct the load to reduce the power to be consumed by the load concerned when the amount of purchased electric power is larger that a predetermined value.

In the above system interconnection system, the load may be an air conditioner, and when the power consumption is reduced, an original set temperature of the air conditioner may be changed to a predetermined power saving set temperature.

In the above system interconnection system, the original set temperature of the air conditioner maybe reduced to a predetermined power saving set temperature for heating operation when the air conditioner is under heating operation, or increased to a predetermined power saving set temperature for cooling operation when the air conditioner is under cooling operation.

In the above system interconnection system, the adjusting unit may restore the set temperature of the air conditioner to the original set temperature when a predetermined purchased power saving period elapses from the instruction of setting the power saving set temperature.

In the above system interconnection system, the adjusting unit may have a storage unit (23) for storing data set in the load, and outputting the stored data to the load after the system is restored from blackout.

According to the present invention, when the amount of purchased electric power is reduced, the adjusting unit outputs an instruction to the load so that the power consumption of the load is reduced. Therefore, the amount of sold electric power is surplus and thus the probability of the power must be purchased can be reduced. As a result, the amount of purchased electric power can be reduce to the minimum level, and this is economical.

Furthermore, when the amount of purchased electric power is increased, the adjusting unit outputs an instruction to the load so that the power consumption of the load is reduced. Therefore, the amount of purchased electric power can be reduced to the minimum level, and this is economical.

Still furthermore, the load is an air conditioner. When the power consumption of the load is reduced, the set temperature of the air conditioner is reduced to the power saving set temperature for heating operation when the air conditioner is under heating operation, or the set temperature of the air conditioner is increased to the power saving set temperature for cooling operation when the air conditioner is under cooling operation. In such a case, even when the air conditioning capacity (power) of the air conditioner is temporarily reduced, the user's feeling temperature is little varied, and thus the amount of purchased electric power can be reduced without bringing the user with uncomfortable feeling.

When the set temperature of the load is restored to the original set temperature after the purchased power saving period elapses from the output of the instruction of the power saving set temperature, the period for which the air conditioning capacity (power) of the air conditioner is reduced can be set to such a value that the user does not feel uncomfortable to the reduction of the air conditioning capacity.

Still furthermore, the adjusting unit stores the data set in each load, and after the system is restored from blackout, this data are output to the load. In general, when the system falls into blackout, no power is supplied to each load. Therefore, when the stop of power supply to each load is continued, the data stored in each load may be lost. However, even in such a blackout situation of the system, the set data are output from the adjusting unit to the loads when the system is restored from the blackout, and thus the lost data can be restored.

As described above, in order to reduce the amount of purchased electric power to the minimum level, the adjusting unit instructs each load (or some load) so that the power consumption of the load is reduced when the amount of sold electric power is reduced.

### BRIEF DESCRIPTION OF THE DRAWINGS

Fig. 1 is a diagram showing a system interconnection system according to the present invention;
Fig. 2 is a diagram showing a LAN board;
Fig. 3 is a flowchart of reducing the amount of purchased electric power; and
Fig. 4 is a flowchart of outputting set data to loads after blackout of a system is restored.

### DETAILED DESCRIPTION OF THE PREFERRED EMBODIMENT

Preferred embodiment according to the present invention will be described with reference to the accompanying drawings.

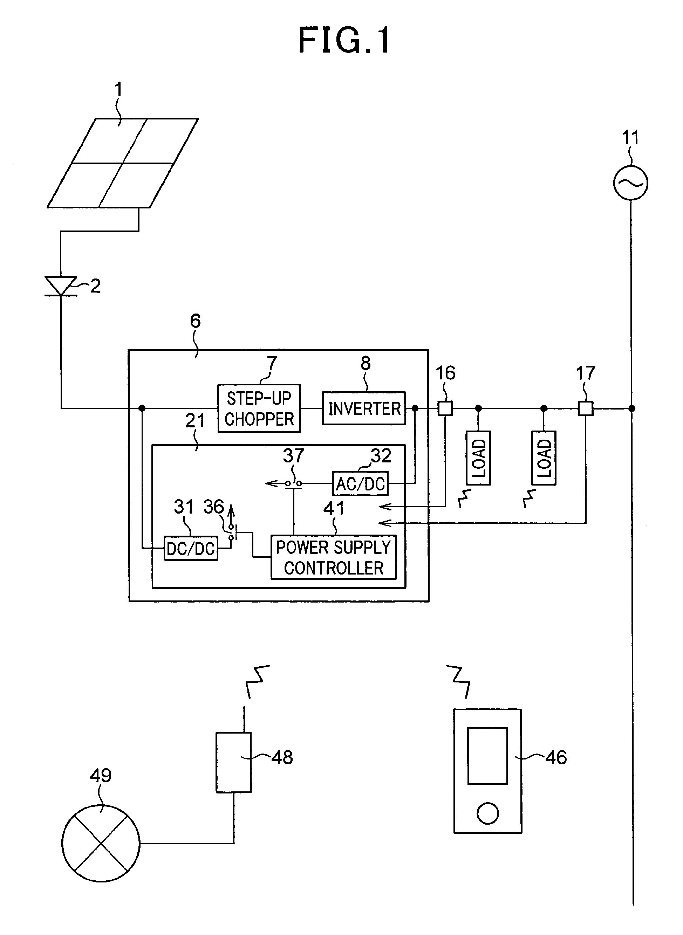

An embodiment of a system interconnection system according to the present invention will be described with reference to Figs. 1 to 4.

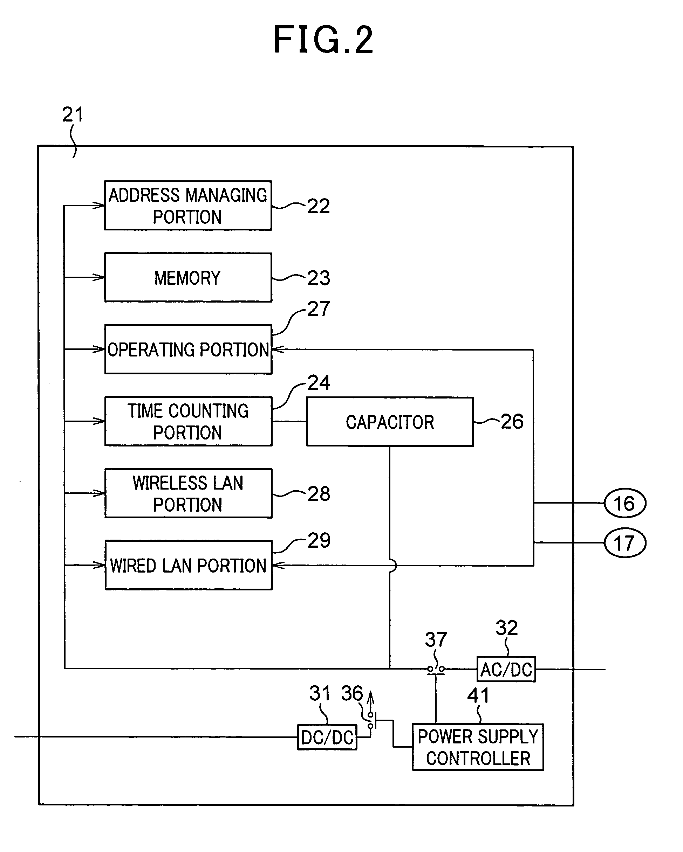

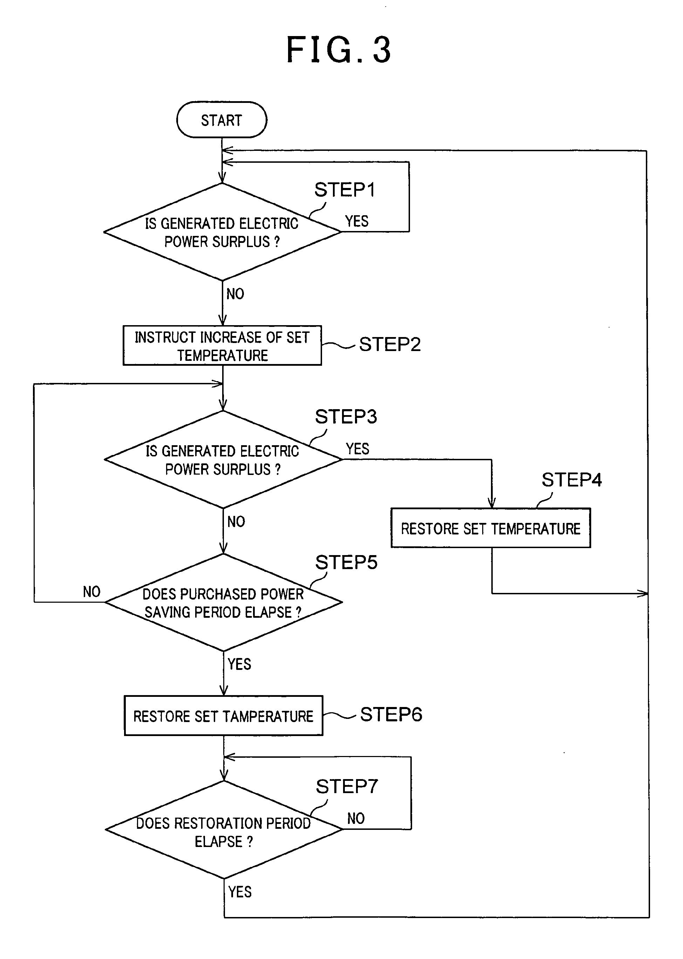

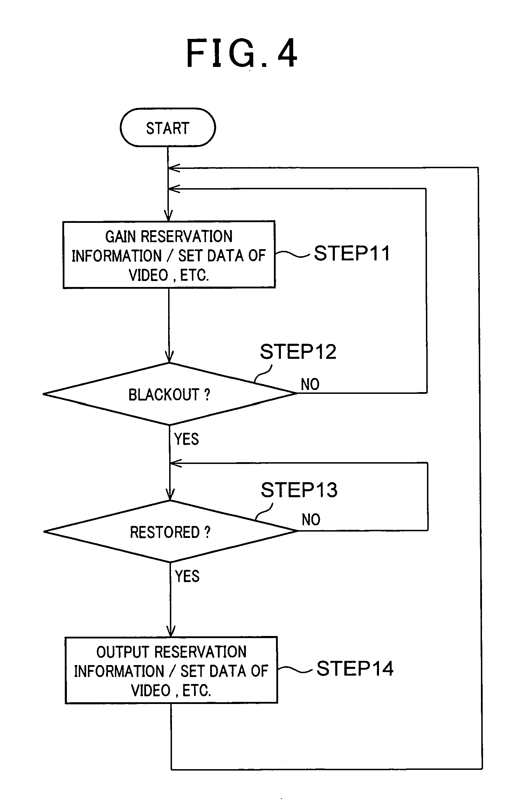

Fig. 1 is a diagram showing a system interconnection system according to the present invention, Fig. 2 is a diagram showing a LAN board, Fig. 3 is a flowchart of reducing the amount of purchased electric power, and Fig. 4 is a flowchart of outputting set data to a load after blackout of the system is restored. a solar battery panel 1 of a photovoltaic power generating system serving as a DC power generating unit, and the solar battery panel 1 is connected to a power conditioner 6 through a backflow preventing diode 2 or the like. According to the power conditioner 6 of this embodiment, the voltage of DC power input from the solar battery panel 1 is boosted by a step-up (boosting) chopper 7, and the boosted voltage is converted to AC power having pseudo sine wave by an inverter 8 so that the AC power thus converted has the same frequency as a predetermined frequency (the frequency of a system 11 (commercial power line) 11 and has a voltage higher than the voltage of the system 11. The AC power thus achieved is output to the system 11.

The system 11 is connected to loads 12 such as an air conditioning apparatus (air conditioner), a freezer, a television set, etc. which consume electricity. When power generated by the photovoltaic power generating system is larger than the consumed power of the loads 12, some or all of the generated power from the photovoltaic power generating system is supplied (that is, sold) to the system 11. On the other hand, when the power generated by the photovoltaic power generating system is smaller than the consumed power of the loads 12, the power is supplied (that is, purchased) from the system 11.

Furthermore, there are also provided a generated-power meter 16 for detecting the amount of electric power generated by the photovoltaic power generating system and a sold/purchased power meter 17 for detecting the amount of electric power sold to or purchased from the system 11 (when an electric type is used as the sold power meter, the output thereof is used as the amount of sold electric power, and when an analog type is used as the sold power meter, the amount of sold electric power (electric energy) is calculated on the basis of both the values of an ammeter and a voltmeter).

The power conditioner 6 is designed so that a LAN board 21 can be installed therein. The LAN board 21 is equipped with an address managing portion 22, a memory 23, a time counting portion 24, a capacitor 26, an operating portion 27, a wireless LAN portion 28 and a wired LAN portion 29, whereby it has a the server function.

The address managing portion 22 manages a self address allocated to the LAN board 21 itself, and addresses allocated to other elements such as the loads 12, a monitor 46 for the power conditioner, connecting equipment 48, etc. As the memory 23 are provided not only a volatile memory, but also a rewritable non-volatile memory for storing programs, set data of the loads 12, etc. The capacitor 26 serves as a backup power source (auxiliary power source) for the time counting portion 24, and it has a capacity enough to enable at least one-day actuation of the time counting portion 24.

Power from the solar battery panel 1 is supplied through the backflow preventing diode 2 to the LAN board 21, subj ected to voltage adjustment in a step-up/step-down converter (DC-DC converter) 31 as a voltage adjusting converter, and then supplied to the respective portions 22 to 29 of the LAN board 21. Furthermore, the AC power from the system 11 is converted to DC power in an AC/DC converter 32, and then supplied to the respective portions 22 to 29 of the LAN board 21. The output of the step-up/step-down converter 31 and the output of the AC/DC converter 32 are set to ON or OFF by opening/closing switches 36 and 37, respectively. The opening/closing switches 36 and 37 are controlled by a power supply controller 41 of the LAN board so that both the opening/closing switches 36 and 37 are prevented from being set to ON at the same time. For example, when the power generation of the solar battery panel 1 is stopped in the night or the like, the opening/closing switch 36 is set to OFF, and also the opening/closing switch 37 is set to ON. On the other hand, when the solar battery panel 1 generates electric power, the opening/closing switch 36 is set to ON and the opening/closing switch 37 is set to OFF.

The wired LAN portion 29 of the LAN board 21 is connected to the power meters 16 and 17 through wires so that communications can be performed therebetween, and achieves measurement data from the power meters 16 and 17.

Furthermore, the wireless LAN portion 28 of the LAN board 21 is connected to the loads 12 having a wireless LAN function such as an air conditioner, a freezer, a television set, etc. and the monitor 46 for the power conditioner so that the communications can be performed therebetween. By the communication function, the loads 12 can input/output the set data, the operation status data, power consumption data, etc. thereof from/to the LAN board 21. The monitor 46 is a multi-function monitor, and it has a touch panel type display screen 46a, an operating portion 46b, a memory, a wired/wireless LAN function, etc. Data such as the amount of electric power generated by the photovoltaic power generating system, the amount of sold/purchased electric power, the self-consumed power, etc. are input from the LAN board to the monitor 46, and displayed on the display screen.

Furthermore, the LAN board 21 is communicable with connecting equipment (a broadband router or the like) 48 to the Internet in the wireless mode, and connected to a communication network 49 such as the Internet or the like through the connection equipment 48.

In the LAN board 21 having the server function of the power conditioner 6 thus constructed, the amount of electric power generated by the photovoltaic power generating system, the amount of sold/purchased electric power to/from the system 11 and the amount of self consumed power can be calculated/stored on the basis of the detection data from the power meters 16 and 17. Furthermore, instruction of reservation and actuation, etc. can be output from a cellular phone, a portable terminal, a personal computer, etc. connected to the internet 49 and the monitor 46 for the power conditioner through the LAN board 21 to the loads 12 such as an air conditioner, a video, hot water supply facilities to a bath, etc., a freezer, a television set, etc. Still furthermore, the LAN board 21 can properly gain the operation status data, the set data, etc. from the loads 12 the air conditioner, the video, the hot water supply facilities to the bath, etc., the freezer, the television set, etc.

The LAN board 21 of the power conditioner 6 is supplied with the power generated by the solar battery panel 1 in the daytime by the switching operation of the opening/closing switches 36 and 37, and supplied with power from the system 11 in the night. Accordingly, when power supply from the system 11 is cut off in the daytime, the generated power of the solar battery panel 1 is supplied to the LAN board 21 irrespective of the blackout, and thus the LAN board 21 operates at all times. Furthermore, when the power supply from the system 11 is cut off in the night, power supply to the LAN board 21 is stopped. At this time, current is supplied from the capacitor 26 to only the time counting portion 24 of the LAN board 21, and the time counting portion 24 continues to operate without being stopped. Accordingly, the function of the communication function can be restored with no interruption of the function of the time counting portion even when the blackout continues for a long term. This power supply to the time counting portion 24 discharges the capacitor 26, however, the generated power of the solar batterypanel 1 is supplied to the capacitor 26 in the daytime, thereby charging the capacitor 26.

When the blackout state is continued for a long term, set data such as reservation set information, temperature set information, etc. may be lost. In such a case, when the system 11 is restored from the blackout, the LAN board 21 transmits the set data of the reservation set information, the temperature set information, etc. to the loads 12 such as the air conditioner, the video, the hot water supply facilities to the bath, etc., the freezer, the television set, etc. in the wireless mode, thereby restoring the set data.

According to the system interconnection system as described above, such a case that the generated power of the solar battery panel 1 is not surplus occurs temporarily (for example, about 10 to 20 minutes) because the load 12 such as the freezer or the like starts its actuation. In this case, even if the set temperature of the air-conditioning apparatus (air conditioner) 12 serving as a load is changed temporarily (for example, about 10 to 20 minutes), the indoor temperature is not rapidly varied, and thus the change of the set temperature of the air conditioner hardly brings the user with uncomfortable feeling. Therefore, when the amount of electric power generated by the solar batter panel 1 is not surplus, the driving capacity of the air conditioner is temporarily reduced, and then the operation mode of the air conditioner 12 is restored to the original one again after the load 12 such as the freezer or the like is stopped, whereby the amount of purchased electric power can be reduced without making the user uncomfortable.

The process of reducing the amount of purchased electric power in the system interconnection system thus constructed will be described with reference to the flowchart of Fig. 3.

In step 1, the LAN board 21 having the server function as a controller samples and gains the amount of generated electric power and the amount of purchased electric power from the generated power meter 16 and the sold/purchased power meter 17. The LAN board 21 executes the following flow on the assumption that the generated power amount is above a reference value (that is, when the generated power amount is not more than the reference value, the LAN board 21 stays in step 1). If the amount sold electric power is smaller than a power-saving start set value, the LAN board 21 judges that the amount of generated power is not surplus, and thus the LAN board 21 goes to S2. On the other hand, if the amount of sold electric power is not less than the power-saving start set value, the LAN board 21 returns to step S1.

In step S2, in order to reduce the air-conditioning capacity of the air conditioner serving as the load 12, the LAN board 21 adds the set temperature of the normal operation mode with a preset power-save adjustment value (for example, 2°C) under cooling operation (Fig. 3 shows the flow under cooling operation), thereby preparing a power saving set temperature (higher than the set temperature of the normal operationmode). On the other hand, under heating operation, the power-save adjusting value (for example, 2°C) is subtracted from the set temperature of the normal operation mode to prepare a power saving set temperature (lower than the set temperature of the normal operation mode). The LAN board 21 outputs the power saving set temperature as the new set temperature to the air conditioner 12 through a wireless LAN and starts the power save mode. The air-conditioning capacity of the air conditioner 12 is controlled on the basis of the power saving set temperature. Then, the LAN board 21 goes to step 3.

In step 3, the LAN board 21 having the server function properly samples and gains the amount of sold electric power from the sold/purchased power meter 17. If the amount of sold electric power thus gained is smaller than the power saving start set value, the LAN board 21 judges that the amount of the generated electric power is still not surplus, and the LAN board 21 goes to step 5. On the other hand, if the amount of sold electric power thus gained is not less than the power saving start set value, the LAN board judges that the amount of the generated electric power is not surplus, and the LAN board 21 goes to step 4. In step 4, the LAN board 21 outputs the set temperature of the normal operation mode to the air conditioner 12 through the wireless LAN to restore the set temperature from the power saving set temperature to the set temperature of the normal operation mode, and then the LAN board 21 returns to step 1.

In step 5, the LAN board 21 judges whether a predetermined purchased power saving period (for example, about 30 minutes) elapses from the start of the power saving mode (that is, the output of the instruction of the power saving set temperature. If the predetermined purchased power saving period has not yet elapsed, the LAN board 21 returns to the step 3. On the other hand, if the purchased power saving period elapses, the operation of the air conditioner under which the set temperature is lower than the user's set temperature is continued, and thus the user may feel uncomfortable. Therefore, the LAN board 21 goes to step 6 to return the operation mode to the normal operation mode.

In step 6, the LAN board 21 outputs the set temperature of the normal operation mode to the air conditioner 12 through the wireless LAN, and goes to step 7 to restore the set temperature from the power saving set temperature to the normal operation mode.

Then, in step 7, after the operation mode is restored to the normal operation mode, the LAN board 21 continues the normal operation mode for a preset restoration period, and then returns to step 1.

As shown in the above flow, the LAN board 21 having the server function functions as an adjusting unit for adjusting the power consumption of the load 12.

Next, the flowof restoring set data such as reservation set information, temperature set information, etc. of the loads 12 after blackout in the system interconnection system thus constructed will be described with reference to the flowchart of Fig. 4.

In step 11, the LAN board 21 having the server function as the controller properly samples and gains set data such as reservation set information, temperature set information, etc. of the loads 12 such as a video, a hot water supplier, etc. through the wireless LAN or the like, and stores these data into the memory. Then, the LAN board 21 goes to step 12.

In step 12, the LAN board 21 judges whether the system 11 is under blackout (failure of power supply) or the like. If the system 11 is not under blackout, the LAN board 21 returns to step 11. On the other hand, if the system 11 is under blackout, the LAN board 21 goes to step 13.

In step 13, the LAN board 21 judges whether the system 11 is restored from the blackout or not. If the system 11 is not restored from the blackout, the LAN board 21 returns to step 13, and awaits its processing until the system 11 is restored from the blackout. On the other hand, if the system 11 is restored from the blackout, the LAN board 21 goes to step 14.

In step 14, the LAN board 21 having the server function outputs the set data such as the reservation set information, the temperature set information, etc. of the loads 12 such as the video, the hot water supplier, etc. through the wireless LAN or the like to the corresponding loads 12. The loads 12 store the input set data into memories or the like and re-set the data thereof. Then, the LAN board 21 returns to step 11.

As described above, the LAN board 21 having the server function as the controller comprises (1) a unit for judging on the basis of the amount of purchased electric power and the amount of sold electric power whether the amount of generated power is surplus or not, (2) a unit for setting the set temperature of the air-conditioning apparatus as a load to the power saving set temperature for reducing the air-conditioning capacity (power) when the amount of generated power is not surplus, (3) a unit for restoring the set temperature of the air conditioning apparatus to the set temperature of the original normal operation mode, and (4) a unit for restoring the set temperature of the air conditioning apparatus to the set temperature of the original normal operation mode when the purchased power saving period elapses from the setting of the power saving set temperature.

As described above, the LAN board 21 is further equipped with units for executing various operations in connection with operations which are required to be executed.

The present invention is not limited to the above embodiment, and various modifications may be made without departing from the subject matter of the present invention, For example, the following modifications may be made.
(1) In the above embodiment, in step 1, if the amount of sold electric power is smaller than the preset power saving start set value, it is judged that the amount of generated electric power is not surplus. However, it may be judged that the amount of generated electric power is not surplus if the amount of purchased electric power is larger than the preset power saving start set value.
(2) The generate electric power detecting unit is not limited to the generated power meter 16. The photovoltaic power generating system controls voltage and current before the power is converted to AC power in order to achieve the maximum generated power with respect to the solar battery panel 1, and thus this power value may be used as the generated electric power.
(3) The DC power generating unit is not necessarily the photovoltaic power generating system, and a fuel cell or the like may be used.
(4) The values of the power saving set temperature, the purchased power saving period and the restoration period may be properly changed.

As described above, when the amount of sold electric power is reduced, the adjusting unit instructs the loads to reduce their power consumption. Therefore, the probability that the power must be purchases can be reduced, and thus the amount of purchased electric power can be reduced. Accordingly, the present invention is optimally applied to a system interconnection system for converting DC power generated by the DC power generating unit such as the photovoltaic power generating system or the like to AC power and then connecting the AC power to the system (commercial power line).

## Claims

1. A system interconnection system for converting DC power generated by a DC power generating unit (1) to AC power and connecting the AC power to a system (11), comprising:
a load for consuming electric power generated by the DC power generating unit (1);
a generated electric power detecting unit (16) for detecting the amount of electric power generated by the DC power generating unit (1);
a sold/purchased electric power detecting unit (17) for detecting the amount of sold/purchased electric power from/to the DC power generating unit (1) to/from the system (11); and
an adjusting unit (21) for adjusting a power consumption of the load in accordance with the amount of the sold/purchased electric power.

2. The system interconnection system according to claim 1, wherein the adjusting unit instructs the load to reduce the power to be consumed by the load concerned when the amount of sold electric power is smaller than a predetermined value.

3. The system interconnection system according to claim 1, wherein the adjusting unit instructs the load to reduce the power to be consumed by the load concerned when the amount of purchased electric power is larger that a predetermined value.

4. The system interconnection system according to claim 2 or 3, wherein the load is an air conditioner, and when the power consumption is reduced, an original set temperature of the air conditioner is changed to a predetermined power saving set temperature.

5. The system interconnection system according to claim 4, wherein the original set temperature of the air conditioner is reduced to a predetermined power saving set temperature for heating operation when the air conditioner is under heating operation, or increased to a predetermined power saving set temperature for cooling operation when the air conditioner is under cooling operation.

6. The system interconnection system according to claim 4, wherein the adjusting unit restores the set temperature of the air conditioner to the original set temperature when a predetermined purchased power saving period elapses from the instruction of setting the power saving set temperature.

7. The system interconnection system according to claim 1, wherein the adjusting unit has a storage unit (23) for storing data set in the load, and outputting the stored data to the load after the system is restored from blackout.
